# EUROPÄISCHE PATENTSCHRIFT

(11) **EP 4 051 922 B1**
(45) Veröffentlichungstag und Bekanntmachung des Hinweises auf die Patenterteilung: **27.08.2025**
(21) Anmeldenummer: 20816388.1
(22) Anmeldetag: 23.10.2020
(51) Int. Cl.: F16D 41/07, F16C 33/38

(54) **FREILAUFELEMENT**
FREEWHEELING ELEMENT
ÉLÉMENT DE ROUE LIBRE

(30) Priorität: 29.10.2019 DE 202019106004 U
(43) Veröffentlichungstag der Anmeldung: 07.09.2022
(73) Patentinhaber: Paul Müller GmbH & Co. KG Unternehmensbeteiligungen, 90411 Nürnberg (DE)
(72) Erfinder: ELBACHER, Manfred, 90425 Nürnberg (DE); RADKE, Andreas, 90427 Nürnberg (DE)
(74) Vertreter: Lösch, Christoph Ludwig Klaus
(86) Internationale Anmeldenummer: PCT/DE2020/100914
(87) Internationale Veröffentlichungsnummer: WO 2021/083458

(56) Entgegenhaltungen:
- DE-A1- 102006 038 201
- DE-A1- 102006 038 201
- DE-B- 1 264 886
- DE-B- 1 264 886
- DE-B- 1 267 039
- DE-B- 1 267 039
- US-A- 3 006 447
- US-A- 3 006 447
- US-A- 5 664 653
- US-A- 5 664 653
- US-A- 5 676 226

## Beschreibung

Die Erfindung betrifft ein Freilaufelement.

Freilaufelemente finden beispielsweise in Richtungskupplungen Anwendung, die in eine Richtung ein Drehmoment durch Kraftschluss übertragen bzw. abstützen und in der Gegenrichtung einen Leerlauf zulassen. Bei Klemmkörperfreiläufen befinden sich hierbei Klemmkörper in der sog. Klemmstellung oder Klemmposition, wenn sie das Drehmoment kraftschlüssig, d.h. reibschlüssig, übertragen und in der sog. Freilaufstellung oder Freilaufposition, wenn sie Leerlauf zulassen.

Herkömmliche Klemmkörperfreiläufe weisen neben den Klemmkörpern unter anderem einen Käfig, in den die Klemmkörper in Taschen aufgenommen sind, auf. EP 2 660 488 A1 zeigt einen derartigen Klemmkörperfreilauf. Nachteilig an derartigen Klemmkörperfreiläufen ist, dass eine zusätzliche Lagerung benötigt wird, da ein klassischer Freilauf keine Lagereigenschaft und damit keine Tragkraft besitzt.

DE 12 64 886 B offenbart ein Freilaufelement mit einem Käfig und einer identischen Anzahl an Klemmkörpern und Wälzkörpern. Sowohl die Klemmkörper als auch die Wälzkörper sind in Taschen des Käfigs aufgenommen. Der Käfig besitzt im Bereich seiner Taschen eine höhere Elastizität als die Klemmkörper und die Wälzkörper. DE 10 2006 038201 A1, US 3 006 447 A, US 5 664 653 A und DE 12 67 039 B beschreiben weitere Freilaufelemente oder Lager mit einem Käfig, Klemmkörpern und Wälzkörpern. US 5 676 226 A beschreibt ein Freilaufelement mit einem äußeren Käfig, einen inneren Käfig und einer ringförmigen Bandfeder, die zwischen dem äußeren Käfig und dem inneren Käfig angeordnet ist. Klemmkörper und Wälzkörper erstrecken sich durch Taschen des inneren Käfigs und des äußeren Käfigs und werden durch Laschen der Bandfeder in Position gehalten.

Aufgabe der vorliegenden Erfindung ist es, ein Freilaufelement mit integrierter Tragkraft zur Verfügung zu stellen.

Diese Aufgabe wird durch ein Freilaufelement mit den Merkmalen des Anspruchs 1 gelöst. Vorteilhafte Ausführungsformen des Freilaufs sind in den Unteransprüchen beschrieben.

Das erfindungsgemäße Freilaufelement weist einen Käfig, eine Mehrzahl von Klemmkörpern und eine Mehrzahl von Wälzkörpern auf. Jeder der Klemmkörper ist in jeweils einer im Käfig ausgebildeten Klemmkörpertasche aufgenommen. Jeder der Wälzkörper ist in jeweils einer im Käfig ausgebildeten Wälzkörpertasche aufgenommen. Der Käfig besitzt eine höhere Elastizität als die Klemmkörper und als die Wälzkörper.

Durch das Vorsehen von Wälzkörpern kann die Tragkraft in das Freilaufelement integriert werden. Des Weiteren wirkt der Käfig durch die im Vergleich zu den Klemmkörpern und den Wälzkörpern höhere Elastizität als federndes Element. Auf andernfalls benötigte metallische Federn als Anfederelemente kann daher verzichtet werden. Ferner besteht die Möglichkeit, durch die Wahl eines Werkstoffes für den Käfig mit einer bestimmten Elastizität, das Anfederverhalten der Klemmkörper und/oder die Lagestabilität der Wälzkörper über einen weiten Bereich einzustellen.

Die Klemmkörper und die Wälzkörper sind bevorzugt aus einem metallischen Material, insbesondere aus einem Stahlwerkstoff, gefertigt. Entsprechend weist der Käfig dann eine Elastizität auf, die größer ist als die Elastizität von metallischen Werkstoffen. Es sind jedoch beispielsweise auch Wälzkörper aus einem keramischen Werkstoff einsetzbar. In diesem Fall weist der Käfig dann eine Elastizität auf, die größer ist als die der eingesetzten metallischen und keramischen Materialien.

In bevorzugter Weise sind die Wälzkörpertaschen - und damit auch die in diesen Wälzkörpertaschen aufgenommenen Wälzkörper - äquidistant über den Umfang des Käfigs verteilt. Auf diese Weise kann eine gleichmäßige Abstützung entlang des Umfangs erreicht und die Tragkraft des Freilaufs entsprechend gleichmäßig erhöht werden.

Als vorteilhaft hat sich das Vorsehen einer ungeraden Anzahl von Wälzkörpertaschen entlang des Umfangs des Käfigs herausgestellt. Im besonderen Maße vorteilhaft ist es hierbei, drei, fünf oder sieben äquidistant verteilte Wälzkörpertaschen vorzusehen. Je größer die Anzahl an Wälzkörpern desto größer wird die Tragkraft, es leidet jedoch zugleich der Freilaufcharakter des Elements.

Erfindungsgemäß sind die Wälzkörper formschlüssig, nämlich in Art einer Rast- oder Schnappverbindung, in den Wälzkörpertaschen aufgenommen. Dadurch ist zum einen eine leichte Montage bzw. Demontage der Wälzkörper möglich, zum anderen kann eine sichere Lagerung der Wälzkörper erreicht werden. Unter Ausnutzung der elastischen Eigenschaft des Käfigwerkstoffs kann die Wälzkörpertasche elastisch aufgedehnt werden, um den Wälzkörper in die Tasche einzurasten bzw. einzuschnappen.

Erfindungsgemäß besteht der Käfig aus einem Polymerwerkstoff, insbesondere aus einem Polyamid. In bevorzugter Weise enthält der Polymerwerkstoff Füllstoffe, insbesondere in Form von Fasern und/oder Kugeln. In besonderer Weise eignet sich als Werkstoff für Käfig glasfaserverstärktes Polyamid, besonders bevorzugt PA 66 GF 25 (Polyamid 66 mit 25% Glasfaseranteil). Es können sowohl nur die Käfigbereiche um die Wälzkörpertaschen und/oder die Klemmkörpertaschen herum als auch der gesamte Käfig aus den oben genannten Werkstoffen bestehen. Durch die Verwendung der oben genannten Werkstoffe kann ein besonders vorteilhaftes Federverhalten des Käfigs erreicht werden. Ferner ist es möglich, durch die Auswahl des Werkstoffes und/oder das Mischungsverhältnis von polymerer Grundmasse zu Füllstoff die Elastizität und das Federverhalten des Käfigs anzupassen.

Die Erfindung ist anhand eines Ausführungsbeispiels in den Zeichnungsfiguren weiter erläutert. Es zeigen:

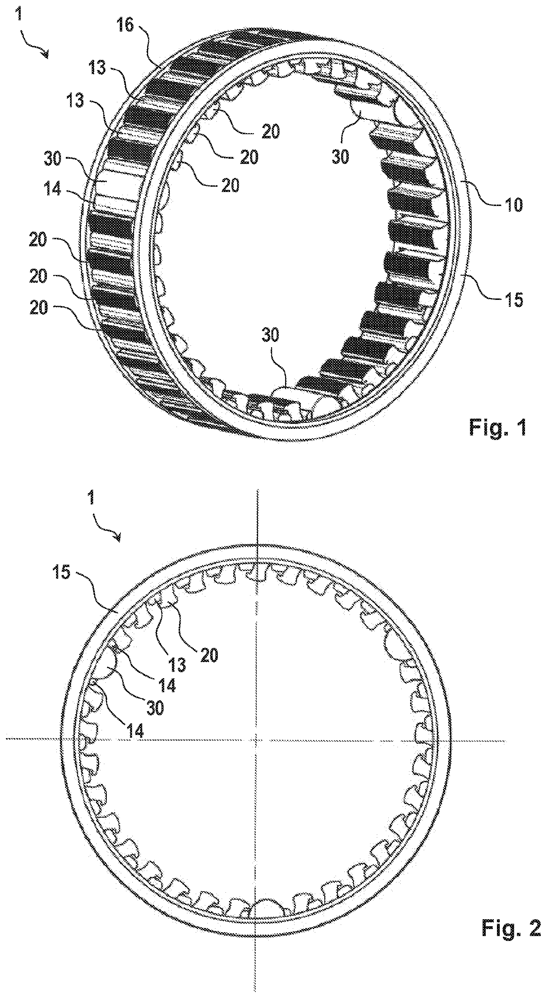

- Fig. 1: eine perspektivische Ansicht eines Freilaufelements;
- Fig. 2: eine Frontalansicht des Freilaufelements aus Fig. 1;
- Fig. 3: eine Seitenansicht des Freilaufelements aus Fig. 2;
- Fig. 4: eine Schnittansicht entlang der Schnittebene A-A aus Fig. 3;
- Fig. 5: das in Fig. 4 dargestellte Freilaufelement in einer exemplarischen Einbausituation.

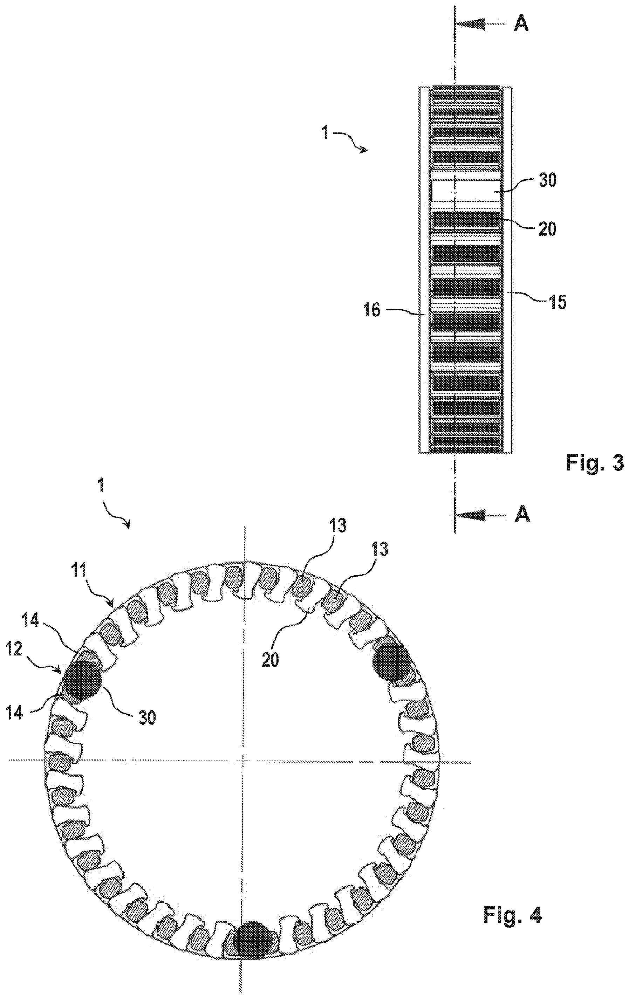

Das in den Figuren dargestellte Freilaufelement 1 ist im Wesentlichen ringförmig ausgebildet und weist einen Käfig 10 aus einem Polymerwerkstoff (z.B. Polyamid 66 mit 25% Glasfaseranteil) auf. Im Käfig 10 sind eine Mehrzahl von Klemmkörpertaschen 11 sowie insgesamt drei Wälzkörpertaschen 12 ausgebildet. Aus Übersichtlichkeitsgründen sind in den Figuren nicht sämtliche Elemente, die mehrmals vorhanden sind, mit einem gesonderten Bezugszeichen versehen. So ist beispielsweise in Fig. 4 lediglich eine Klemmkörpertaschen 11 mit einem Bezugszeichen versehen. Die Klemmkörpertaschen 11 und die Wälzkörpertaschen 12 stellen hierbei Ausnehmungen bzw. Löcher des Käfigs 10 dar. Mit anderen Worten weist der Käfig 10 axial verlaufende erste und zweite Stege 13 bzw. 14 sowie ringförmige Abschlussflansche 15, 16 auf. Das Raumvolumen zwischen jeweils zwei benachbarten Stegen 13, 14 und den beiden Abschlussflanschen 15, 16 bildet jeweils eine Klemmkörpertasche 11 bzw. eine Wälzkörpertasche 12. Die Stege 13 sind jeweils im Wesentlichen quaderförmig und mit einem konvexen Querschnitt in axialer Richtung des Freilaufelements 1 ausgebildet. Zwischen zwei Wälzkörpertaschen 12 sind in Umfangsrichtung des Freilaufelements jeweils mehrere Klemmkörpertaschen 11 angeordnet.

In jeder der Klemmkörpertaschen 11 ist jeweils ein Klemmkörper 20 aufgenommen. Die Verbindung zwischen Klemmkörper 20 und Käfig 10 ist hierbei als Schnappverbindung ausgebildet. Die Klemmkörper 20 sind aus einem Stahlwerkstoff gefertigt.

In jeder der Wälzkörpertaschen 12 ist jeweils ein Wälzkörper 30 aufgenommen, wobei der Wälzkörper 30 als Zylinderrolle ausgebildet und aus einem Stahlwerkstoff gefertigt ist. Die Verbindung zwischen Wälzkörper 30 und Käfig 10 ist hierbei ebenfalls als Schnappverbindung ausgebildet. Die Wälzkörpertasche 12 ist hierbei derart ausgeprägt, dass sie die Wälzkörper 30 von zwei Seiten umfasst bzw. einfasst (Überdeckung), sodass der rollenförmige Wälzkörper 30 im Käfig 10 gehalten wird. Die Überdeckung ist zugleich so klein gewählt, dass sie unter Ausnutzung der elastischen Eigenschaft des Käfigwerkstoffs mit einfacher Handmontagekraft elastisch aufgedehnt werden kann, um den Wälzkörper 30 in die Wälzkörpertasche 12 einzuklicken/einzuschnappen.

Die Wälzkörpertaschen 12 sind in Umfangsrichtung breiter ausgebildet als die Klemmkörpertaschen 11. Mit anderen Worten besitzen die ersten Stege 13 einen kleineren Abstand zueinander als die zweiten Stege 14 zueinander.

Die Elastizität des Käfigs 10 - insbesondere die Elastizität der Stege 13, 14 - ist höher als die Elastizität der Klemmkörper 20 und der Wälzkörper 30. Diese höhere Elastizität der Stege 13, 14 wird insbesondere dadurch erreicht, dass der Käfig 10 (bzw. zumindest die Stege 13, 14) aus einem Werkstoff gefertigt ist, der einen geringeren Elastizitätsmodul aufweist als die Werkstoffe, aus denen die Klemmkörper 20 und die Wälzkörper 30 gefertigt sind.

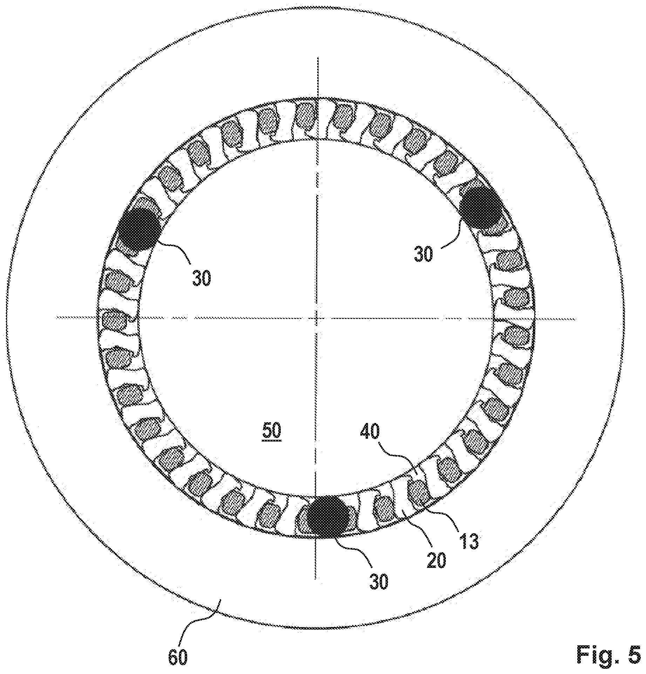

Fig. 5 zeigt eine exemplarische Einbausituation des Freilaufelements 1 in einem Spalt 40 zwischen einem innenliegenden ersten (voll)zylindrischen Bauteil 50 und einem außenliegenden zweiten hohlzylindrischen Bauteil 60. Die Abmessungen und die Form der Bauteile 50 und 60 sind herbei als rein illustrativ anzusehen. Das erste Bauteil 50 ist koaxial zum zweiten Bauteil 60 angeordnet. Innerhalb dieses Spaltes 40 ist das Freilaufelement 1 angeordnet. Die Klemmkörper 20 bilden in einer Klemmstellung eine reibschlüssige Verbindung mit dem ersten Bauteil 50 und dem zweiten Bauteil 60 aus. In einer Freilaufstellung hingegen erlauben die Klemmkörper 20 eine Rotationsbewegung des ersten Bauteils 50 relativ zum zweiten Bauteil 60. Jeder der Stege 13 weist eine Anfederfläche auf. Diese Anfederfläche wird in der Freilaufstellung von dem benachbart liegenden Klemmkörper 20 kontaktiert. Genauer bildet sich zwischen der Anfederfläche des Steges 13 und dem benachbart liegenden Klemmkörper 20 in der Freilaufstellung ein Flächenkontakt bzw. eine Überdeckung aus. In der Klemmstellung hingegen wird die Anfederfläche des Steges 13 nicht vom Klemmkörper 20 kontaktiert.

Die Wälzkörper 30 stehen sowohl in der Klemmstellung als auch in der Freilaufstellung mit dem ersten Bauteil 50 und dem zweiten Bauteil 60 in Kontakt und ermöglichen eine Wälzlagerung der beiden Bauteil 50 und 60. Auf diese Weise besitzt das Freilaufelement 1 eine hohe Tragfähigkeit und kann zugleich als drehrichtungsabhängige Kupplung dienen.

Das in den Figuren dargestellte Freilaufelement 1 weist somit einen Käfig 10, eine Mehrzahl von Klemmkörper 20 sowie mehrere Wälzkörper 30 auf. Die Klemmkörper 20 und die Wälzkörper 30 sind mittels Rast- bzw. Schnappverbindungen in der Klemmkörpertasche 11 bzw. der Wälzlagertasche 12 aufgenommen. Der Käfig 10 besitzt eine höhere Elastizität als die Klemmkörper 20 und die Wälzkörper 30. Die insgesamt drei Wälzkörpertaschen 12 sind äquidistant über den Umfang des Käfigs 10 verteilt.

### BEZUGSZEICHENLISTE

- 1: Freilaufelement
- 10: Käfig
- 11: Klemmkörpertasche
- 12: Wälzkörpertasche
- 13: Erster Steg
- 14: Zweiter Steg
- 15: Erster Abschlussflansch
- 16: Zweiter Abschlussflansch
- 20: Klemmkörper
- 30: Wälzkörper
- 40: Spalt
- 50: Zylindrisches Bauteil
- 60: Hohlzylindrisches Bauteil

## Patentansprüche

1. Freilaufelement (1) mit:
- einem Käfig (10) aus einem Polymerwerkstoff,
- einer Mehrzahl von Klemmkörpern (20), wobei jeder der Klemmkörper (20) formschlüssig in jeweils einer im Käfig (10) ausgebildeten Klemmkörpertasche (11) aufgenommen ist, und
- einer Mehrzahl von Wälzkörpern (30), wobei jeder der Wälzkörper (30) formschlüssig in jeweils einer im Käfig (10) ausgebildeten Wälzkörpertasche (12) aufgenommen ist,
wobei der Käfig (10) eine höhere Elastizität als die Klemmkörper (20) und als die Wälzkörper (30) besitzt,
**dadurch gekennzeichnet, dass**:
- entlang des Umfangs des Käfigs (10) zwischen zwei benachbarten Wälzkörpertaschen (12) jeweils mehrere Klemmkörpertaschen (11) ausgebildet sind,
- die Wälzkörper (30) in Art einer Rast- oder Schnappverbindung in den Wälzkörpertaschen (12) aufgenommen sind, und
- die Klemmkörper (20) in Art einer Rast- oder Schnappverbindung in den Klemmkörpertaschen (11) aufgenommen sind.

2. Freilaufelement nach Anspruch 1, wobei die Wälzkörpertaschen (12) äquidistant entlang des Umfangs des Käfigs (10) verteilt angeordnet sind.

3. Freilaufelement nach Anspruch 1 oder 2 aufweisend eine ungerade Anzahl an Wälzkörpertaschen (12).

4. Freilaufelement nach Anspruch 3, wobei exakt drei, fünf oder sieben Wälzkörpertaschen (12) ausgebildet sind.

5. Freilaufelement nach einem der vorhergehenden Ansprüche, wobei der Käfig (10) aus einem Polyamid besteht.

6. Freilaufelement nach einem der vorhergehenden Ansprüche, wobei der Polymerwerkstoff Füllstoffe, insbesondere Fasern und/oder Kugeln, enthält.

7. Freilaufelement nach einem der vorhergehenden Ansprüche, wobei der Käfig (10) aus einem glasfaserverstärkten Polyamid, insbesondere aus PA 66 GF 25, besteht.

## Claims

1. Freewheeling element (1) having:
- a cage (10) made of a polymer material,
- a plurality of sprags (20), wherein each of the sprags (20) is accommodated in a form-fitting manner in a respective sprag pocket (11) formed in the cage (10),
and
- a plurality of rolling bodies (30), wherein each of the rolling bodies (30) is accommodated in a form-fitting manner in a respective rolling-body pocket (12) formed in the cage (10),
wherein the cage (10) has a higher level of elasticity than the sprags (20) and the rolling bodies (30),
**characterized in that**:
- a plurality of sprag pockets (11) are formed, in each case between two adjacent rolling-body pockets (12), along the circumference of the cage (10),
- the rolling bodies (30) are accommodated in the rolling-body pockets (12) in the manner of a latching or snap-fit connection, and
- the sprags (20) are accommodated in the sprag pockets (11) in the manner of a latching or snap-fit connection.

2. Freewheeling element according to Claim 1, wherein the rolling-body pockets (12) are distributed in an equidistant manner along the circumference of the cage (10).

3. Freewheeling element according to Claim 1 or 2, having an odd number of rolling-body pockets (12).

4. Freewheeling element according to Claim 3, wherein exactly three, five or seven rolling-body pockets (12) are formed.

5. Freewheeling element according to any one of the preceding claims, wherein the cage (10) consists of a polyamide.

6. Freewheeling element according to any one of the preceding claims, wherein the polymer material contains fillers, in particular fibres and/or balls.

7. Freewheeling element according to any one of the preceding claims, wherein the cage (10) consists of a glass-fibre-reinforced polyamide, in particular of PA 66 GF 25.

## Revendications

1. Élément de roue libre (1) avec :
- une cage (10) en un matériau polymère,
- une pluralité de corps de serrage (20), chacun des corps de serrage (20) étant reçu par complémentarité de formes dans une poche de corps de serrage (11) respective réalisée dans la cage (10), et
- une pluralité de corps de roulement (30), chacun des corps de roulement (30) étant reçu par complémentarité de forme dans une poche de corps de roulement (12) respective réalisée dans la cage (10),
la cage (10) ayant une élasticité supérieure à celle des corps de serrage (20) et à celle des corps de roulement (30),
**caractérisé en ce que** :
- plusieurs poches de corps de serrage (11) sont réalisées le long de la périphérie de la cage (10) entre deux poches de corps de roulement (12) voisines,
- les corps de roulement (30) sont reçus dans les poches de corps de roulement (12) à la manière d'un assemblage par encliquetage ou par pression, et
- les corps de serrage (20) sont reçus dans les poches de corps de serrage (11) à la manière d'un assemblage par encliquetage ou par pression.

2. Élément de roue libre selon la revendication 1, dans lequel les poches de corps de roulement (12) sont réparties de manière équidistante le long de la périphérie de la cage (10).

3. Élément de roue libre selon la revendication 1 ou 2, présentant un nombre impair de poches de corps de roulement (12).

4. Élément de roue libre selon la revendication 3, dans lequel exactement trois, cinq ou sept poches de corps de roulement (12) sont réalisées.

5. Élément de roue libre selon l'une quelconque des revendications précédentes, dans lequel la cage (10) est constituée d'un polyamide.

6. Élément de roue libre selon l'une quelconque des revendications précédentes, dans lequel le matériau polymère contient des charges, notamment des fibres et/ou des billes.

7. Élément de roue libre selon l'une quelconque des revendications précédentes, dans lequel la cage (10) est constituée d'un polyamide renforcé de fibres de verre, notamment de PA 66 GF 25.
